# DEMANDE DE BREVET EUROPEEN

(11) **EP 4 660 517 A1**
(43) Date de publication de la demande: **10.12.2025**
(21) Numéro de dépôt: 25171672.6
(22) Date de dépôt: 22.04.2025
(51) Int. Cl.: F17C 7/02

(54) **INSTALLATION DE STOCKAGE ET DE DISTRIBUTION DE FLUIDE CRYOGÉNIQUE**

(30) Priorité: 04.06.2024 FR 2405851
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: DUVAL, Stéphane, 38360 SASSENAGE (FR); ZICK, Golo, 38360 SASSENAGE (FR)
(74) Mandataire: Air Liquide

(57) **Abrégé**

L'invention concerne une installation de stockage et de distribution de fluide cryogénique, par exemple de l'hydrogène liquide, comprenant un réservoir (2) cryogénique muni d'une conduite (3) de soutirage configurée pour permettre le soutirage de liquide du réservoir (2) et un dispositif de pressurisation du réservoir (2) comprenant un conduite (5) d'injection reliée au réservoir (2) et configurée pour permettre l'injection de fluide dans le réservoir (2) pour pressuriser le réservoir (2), par exemple pour maintenir la pression dans le réservoir (2) lors d'un soutirage de liquide, le dispositif de pressurisation comprenant un éjecteur (4) disposé sur la conduite (5) d'injection, l'éjecteur (4) ayant une première entrée pour du gaz moteur reliée à une source (6) de gaz sous pression de l'installation (1), une seconde entrée d'aspiration reliée à une autre source de fluide de préférence liquéfié, la sortie de l'éjecteur (4) étant reliée au réservoir (2).

## Description

L'invention concerne une installation de stockage et de distribution de fluide cryogénique.

L'installation s'applique avantageusement au stockage et à la distribution d'hydrogène liquide.

L'invention concerne plus particulièrement une installation de stockage et de distribution de fluide cryogénique, par exemple de l'hydrogène liquide, comprenant un réservoir cryogénique muni d'une conduite de soutirage configurée pour permettre le soutirage de liquide du réservoir et un dispositif de pressurisation du réservoir comprenant un conduite d'injection reliée au réservoir et configurée pour permettre l'injection de fluide dans le réservoir pour pressuriser le réservoir, par exemple pour maintenir la pression dans le réservoir lors d'un soutirage de liquide.

L'invention concerne en particulier le soutirage de liquide cryogénique (par exemple d'hydrogène liquide) à partir d'un réservoir cryogénique (fixe ou mobile). Dans certaines applications, le soutirage d'un débit liquide est compris entre une et deux tonnes par heures (ou plus peut être requis).

Les stockages de liquides cryogéniques ne sont généralement pas équipés de pompes de soutirage mais utilisent au contraire un dispositif de pressurisation du stockage (par exemple un échangeur atmosphérique positionné sous le réservoir) permettant une auto-pressurisation.

Ce dispositif permet de compenser la perte de volume liquide dans le réservoir lors du soutirage via un réinjection d'hydrogène froid soutiré et vaporisé. Ce gaz de vaporisation peut être prélevé dans la partie liquide et vaporisé avant d'être réinjecté dans la phase gazeuse du stockage.

Ces dispositifs de pressurisation ont cependant des capacités de vaporisation limitées permettant en nominal des débits de soutirage liquide limités.

Une solution serait d'utiliser un échangeur atmosphérique « externe » permettant d'adapter sa taille au besoin de vaporisation pour répondre au fort débit de soutirage. Cette solution se heurte aux problèmes d'assurer une très faible perte de charge sur l'ensemble du circuit extérieur compte tenu de la taille de l'échangeur et de la nécessité de flexible de raccordement sur le circuit retour. La perte de charge générée sera ainsi sans aucun doute nettement supérieure à la pression hydrostatique disponible dans le stockage comme seule force motrice.

Un but de la présente invention est de pallier tout ou partie des inconvénients de l'art antérieur relevés ci-dessus.

A cette fin, l'installation selon l'invention, par ailleurs conforme à la définition générique qu'en donne le préambule ci-dessus, est essentiellement caractérisée en ce que le dispositif de pressurisation comprend un éjecteur disposé sur la conduite d'injection, l'éjecteur ayant une première entrée pour du gaz moteur reliée à une source de gaz sous pression de l'installation, une seconde entrée d'aspiration reliée à une autre source de fluide de préférence liquéfié, la sortie de l'éjecteur étant reliée au réservoir.

Par ailleurs, des modes de réalisation de l'invention peuvent comporter l'une ou plusieurs des caractéristiques suivantes :
- la seconde entrée d'aspiration de l'éjecteur est reliée à la conduite (3) de soutirage,
- l'installation comprend une vanne, par exemple une vanne d'isolation et/ou une vanne de régulation de la pression et/ou du débit de fluide admis dans la seconde entrée d'aspiration de l'éjecteur,
- la source de gaz sous pression comprend au moins un stockage de gaz sous pression de préférence muni d'un régulateur de pression et/ou de débit,
- l'installation comprend un capteur de pression du flux en sortie de l'éjecteur et/ou dans le réservoir,
- le régulateur de pression est configuré pour réguler la pression et/ou le débit du gaz moteur en fonction de la mesure du capteur de pression,
- l'installation comprend un capteur de température du flux disposé en sortie de l'éjecteur,
- la conduite d'injection comprend une vanne de régulation de pression et/ou de débit disposée en parallèle de l'éjecteur,
- la vanne située en parallèle de l'éjecteur est configurée pour réguler la température du fluide en aval de l'éjecteur en fonction de la mesure du capteur de température,
- la vanne de régulation de la pression et/ou du débit de fluide admis dans la seconde entrée d'aspiration de l'éjecteur est configurée pour réguler la pression et/ou le débit en fonction de la mesure du capteur de température,
- l'installation comporte un échangeur de chaleur de réchauffage du flux de fluide admis à la seconde entrée d'aspiration de l'éjecteur,
- le dispositif de pressurisation comprend en outre un organe de pressurisation du réservoir supplémentaire comprenant par exemple un échangeur atmosphérique positionné sous le réservoir configuré pour coopérer, par exemple simultanément avec l'éjecteur pour permettre d'augmenter le débit de du fluide soutiré du réservoir.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :

### Brève description des figures

L'invention sera mieux comprise à la lecture de la description qui va suivre donnée uniquement à titre d'exemple et faite en se référant aux dessins annexés dans lesquels :

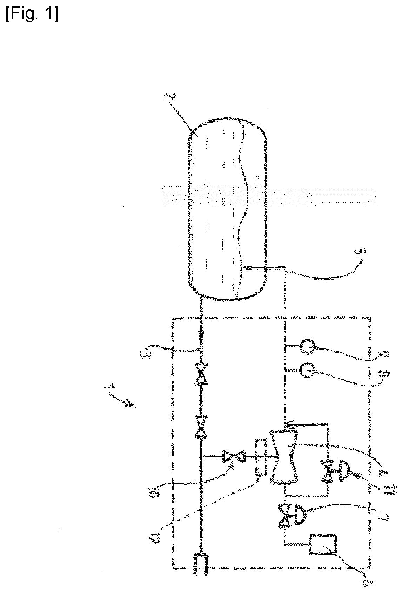

[Fig. 1] est une vue en coupe verticale, schématique et partielle, illustrant un exemple de structure et de fonctionnement d'une installation selon l'invention.

### Description détaillée

Sur toutes les figures, les mêmes références se rapportent aux mêmes éléments.

Dans cette description détaillée, les réalisations suivantes sont des exemples. Bien que la description se réfère à un ou plusieurs modes de réalisation, cela ne signifie pas que les caractéristiques s'appliquent seulement à un seul mode de réalisation. De simples caractéristiques de différents modes de réalisation peuvent également être combinées et/ou interchangées pour fournir d'autres réalisations.

L'installation 1 de stockage et de distribution de fluide cryogénique illustrée comprend un réservoir 2 cryogénique (par exemple à double enveloppe). Ce réservoir 2 est muni d'une conduite 3 de soutirage configurée pour permettre le soutirage de liquide du réservoir 2.

La conduite 3 de soutirage est dépourvue de pompe. L'installation 1 comprend en outre un dispositif de pressurisation du réservoir 2 comprenant un conduite 5 d'injection reliée au réservoir 2 (de préférence débouchant en partie supérieure du réservoir 2) et configurée pour permettre l'injection de fluide dans le réservoir 2 pour pressuriser le réservoir 2.

Par exemple, cette conduite 5 d'injection permet de maintenir une pression déterminée dans le réservoir 2, notamment lors du soutirage de liquide.

Ce dispositif de pressurisation comprend un éjecteur 4 disposé sur la conduite 5 d'injection ayant une première entrée pour du gaz moteur reliée à une source 6 de gaz sous pression de l'installation 1, une seconde entrée d'aspiration reliée à la conduite 3 de soutirage tandis que la sortie de l'éjecteur 4 est reliée au réservoir 2 par la conduite 5 d'injection.

L'éjecteur 4 permet d'aspirer du liquide prélevé dans le réservoir 2 source par la conduite 3 de soutirage à l'aide de la force motrice générée par le flux de gaz pressurisé moteur fourni par la source 6 de gaz sous pression. Ceci produit au refoulement (sortie) de l'éjecteur 4 un gaz froid (par exemple à une température comprise entre la température de saturation et un réchauffement de 0K à 50K au-dessus de cet équilibre pour le cas de l'hydrogène).

Cette structure permet de générer dans la conduite 5 de pressurisation un flux de fluide ayant un débit et une température maîtrisés pour assurer la pressurisation du réservoir 2. Ceci permet en particulier de maintenir la pression dans le réservoir 2 même pour des débits relativement importants (par exemple supérieurs à une tonne par heure). Ce dispositif de pressurisation permet en effet de fournir un débit de fluide de gaz de pressurisation dépassant largement les capacités des systèmes de pressurisation connus.

De plus, ce dispositif de pressurisation permet une consommation de gaz (gaz moteur) relativement moindre comparativement à une simple injection d'un débit de gaz (relativement chaud) dans le réservoir à partir d'une source de gaz. De plus, le fait d'injecter un gaz relativement froid permet de diminuer l'effet de re-condensation dans le réservoir 2 et ainsi de mieux stabiliser la pression.

La seconde entrée de l'éjecteur prélève une petite fraction du liquide soutiré. Comme illustré ceci peut être réalisé via une conduite de dérivation munie d'une vanne 10 de régulation de la pression et/ou du débit.

Ce liquide est aspiré dans l'éjecteur 4 par effet venturi avec la force motrice générée par le débit de gaz moteur fourni par la source 6. La source 6 comprend par exemple une ou des bouteilles de gaz sous pression de préférence équipée d'un organe de détente tel qu'une vanne 7 configuré pour assurer un débit ou une pression déterminée.

L'éjecteur 4 peut être dimensionné pour obtenir à sa sortie de refoulement un mélange de liquide et de gaz à une pression déterminée pour compenser par exemple les pertes de charge du circuit entre la sortie éjecteur 4 et l'entrée du réservoir 2. Le débit fourni par l'éjecteur 4 dans le volume gazeux du réservoir 2 peut être dimensionné pour compenser la perte du liquide soutiré à une pression de soutirage donnée.

Le mélange de liquide et gazeux (typiquement de l'hydrogène) permet de produire un débit suffisant pour réguler la pression dans le réservoir 2 en limitant la quantité de gaz relativement chaud fourni par la source 6 de gaz sous pression.

Le mélange de liquide et gazeux (typiquement de l'hydrogène) permet de produire un débit suffisant pour réguler la pression dans le réservoir 2 en limitant la quantité de gaz relativement chaud fourni par la source 6 de gaz sous pression. En effet, chaque molécule servant à la pressurisation et prélevée du débit de soutirage 3 peut être économisée dans la source de gaz chaud 6. La pression disponible dans la source de gaz chaud 6 est souvent bien supérieure à la pression nécessaire dans le réservoir 2 pour limiter le volume de transport. Cette surpression n'est alors pas directement utilisable dans le réservoir 2, et peut même avoir un effet négatif lors d'une détente directe dans le réservoir 2, car l'hydrogène ou l'hélium se réchauffent lors d'une détente dans une vanne. En injectant un gaz chaud, l'échange thermique entre les parties froides du réservoir 2 et le gaz injecté mène à une densification voire une liquéfaction de ce gaz, ce qui compense une partie de l'effet de pressurisation. Cet effet de compensation néfaste est plus marqué si la différence de température est forte. Pour un contrôle de pression on préfère donc injecter un gaz de pressurisation qui n'est pas surchauffé contre l'équilibre d'une manière trop importante. Le mélange avec une partie du liquide soutiré permet donc en plus d'une économie de molécules une thermalisation à un niveau de température plus adapté à la régulation de pression.

La consommation de liquide prélevé est relativement faible par rapport au débit de liquide soutiré transféré vers l'utilisateur (par exemple de l'ordre de quelques pourcents).

Le débit de gaz moteur fourni à la première entrée de l'éjecteur 4 peut être régulé par une vanne 7 de régulation qui peut être asservie par la pression de refoulement mesurée en sortie de l'éjecteur 4 par un capteur 9 de pression. Ce capteur 9 peut aussi être situé directement au niveau ou sur le réservoir 2 Alternativement ou en combinaison, un capteur 8 de température peut être prévue en sortie de l'éjecteur 4 pour permettre de contrôler la température du flux fourni au réservoir 2 en contrôlant la vanne 10 de régulation située en amont de la seconde entrée de l'éjecteur 4 et/ou en contrôlant une vanne 11 de régulation de débit disposée sur la conduite 5 d'injection de préférence en parallèle de l'éjecteur 4.

Comme illustré schématiquement en pointillés, l'installation 1 peut comporter un échangeur 12 de chaleur de réchauffage du flux de fluide (liquide) admis à la seconde entrée d'aspiration de l'éjecteur 4. Cet échangeur 12 de chaleur facultatif peut être un échangeur atmosphérique situé à l'aspiration de l'éjecteur et peut assurer une vaporisation du liquide pour un meilleur fonctionnement, en fonction par exemple du dimensionnement de l'éjecteur 4.

En outre, l'installation 1 peut comporter un débitmètre en sortie d'éjecteur 4 sur la conduite d'injection 5. Ce débitmètre (non représenté) peut permettre de déterminer précisément le débit de refoulement de l'éjecteur (en vue de son dimensionnement par exemple).

Le dispositif d'éjecteur 4 et la circuiterie et tout ou partie des organes associés peut être logé à l'intérieur d'un carter ou cadre schématisé en pointillés. Cet ensemble peut être intégré sur un support mobile indépendant et distinct du réservoir ou un semi-remorque ou peut être logé directement sur le réservoir ou stockage ou semi-remorque.

Le dispositif de pressurisation peut comprendre en outre un organe de pressurisation du réservoir supplémentaire ("PBU") comprenant, par exemple, un échangeur atmosphérique pouvant être positionné sous le réservoir et configuré pour coopérer, par exemple simultanément avec l'éjecteur 4 pour permettre d'augmenter le débit de du fluide soutiré du réservoir 2. Cet organe de pressurisation supplémentaire du réservoir ("PBU") peut comporter une boucle permettant de soutirer du liquide, le vaporiser dans l'échangeur externe et le renvoyer dans le réservoir 2. Ceci peut être utilisé en même temps ou séquentiellement avec le système avec éjecteur 4.

## Revendications

1. Installation de stockage et de distribution de fluide cryogénique, par exemple de l'hydrogène liquide, comprenant un réservoir (2) cryogénique muni d'une conduite (3) de soutirage configurée pour permettre le soutirage de liquide du réservoir (2) et un dispositif de pressurisation du réservoir (2) comprenant un conduite (5) d'injection reliée au réservoir (2) et configurée pour permettre l'injection de fluide dans le réservoir (2) pour pressuriser le réservoir (2), par exemple pour maintenir la pression dans le réservoir (2) lors d'un soutirage de liquide, **caractérisé en ce que** le dispositif de pressurisation comprend un éjecteur (4) disposé sur la conduite (5) d'injection, l'éjecteur (4) ayant une première entrée pour du gaz moteur reliée à une source (6) de gaz sous pression de l'installation (1), une seconde entrée d'aspiration reliée à une autre source de fluide de préférence liquéfié, la sortie de l'éjecteur (4) étant reliée au réservoir (2).

2. Installation selon la revendication précédente **caractérisée en ce que** la seconde entrée d'aspiration de l'éjecteur (4) est reliée à la conduite (3) de soutirage.

3. Installation selon la revendication précédente, **caractérisée en ce qu'**elle comprend une vanne (10), par exemple une vanne d'isolation et/ou une vanne de régulation de la pression et/ou du débit de fluide admis dans la seconde entrée d'aspiration de l'éjecteur (4).

4. Installation selon l'une quelconque des revendications précédentes **caractérisée en ce que** la source (6) de gaz sous pression comprend au moins un stockage de gaz sous pression de préférence muni d'un régulateur (7) de pression et/ou de débit.

5. Installation selon la revendication précédente **caractérisée en ce qu'**elle comprend un capteur (9) de pression du flux en sortie de l'éjecteur (4) et/ou dans le réservoir (2).

6. Installation selon la revendication précédente **caractérisée en ce que** le régulateur (7) de pression est configuré pour réguler la pression et/ou le débit du gaz moteur en fonction de la mesure du capteur (9) de pression.

7. Installation selon l'une quelconque des revendications précédentes **caractérisée en ce qu'**elle comprend un capteur (8) de température du flux disposé en sortie de l'éjecteur (4).

8. Installation selon l'une quelconque des revendications précédentes **caractérisée en ce que** la conduite (5) d'injection comprend une vanne (11) de régulation de pression et/ou de débit disposée en parallèle de l'éjecteur (4).

9. Installation selon les revendications 7 et 8, **caractérisée en ce que** la vanne (11) située en parallèle de l'éjecteur est configurée pour réguler la température du fluide en aval de l'éjecteur (4) en fonction de la mesure du capteur (8) de température.

10. Installation selon les revendications 3 et 7, **caractérisée en ce que** la vanne (10) de régulation de la pression et/ou du débit de fluide admis dans la seconde entrée d'aspiration de l'éjecteur (4) est configurée pour réguler la pression et/ou le débit en fonction de la mesure du capteur (8) de température.

11. Installation selon l'une quelconque des revendications précédentes, **caractérisée en ce qu'**elle comporte un échangeur (12) de chaleur de réchauffage du flux de fluide admis à la seconde entrée d'aspiration de l'éjecteur (4).

12. Installation selon l'une quelconque des revendications précédentes, **caractérisée en ce que** le dispositif de pressurisation comprend en outre un organe de pressurisation du réservoir supplémentaire comprenant par exemple un échangeur atmosphérique positionné sous le réservoir configuré pour coopérer, par exemple simultanément avec l'éjecteur (4) pour permettre d'augmenter le débit de du fluide soutiré du réservoir (2) .
